# EUROPÄISCHE PATENTSCHRIFT

(11) **EP 2 110 586 B1**
(45) Veröffentlichungstag und Bekanntmachung des Hinweises auf die Patenterteilung: **30.11.2011**
(21) Anmeldenummer: 08007342.2
(22) Anmeldetag: 15.04.2008
(51) Int. Cl.: F16K 11/078, F16K 31/60

(54) **Sanitärarmatur mit separater Lagerung des Betätigungshebels**
Sanitary faucet with separately mounted actuation lever
Robinet sanitaire dotée d'un stockage séparé du levier d'actionnement

(43) Veröffentlichungstag der Anmeldung: 21.10.2009
(73) Patentinhaber: KWC AG, 5726 Unterkulm (CH)
(72) Erfinder: Graber, Heinz, 5727 Oberkulm (CH)
(74) Vertreter: Schaad, Balass, Menzl & Partner AG

(56) Entgegenhaltungen:
- DE-A1- 3 327 776
- DE-A1- 3 838 765
- DE-A1- 4 443 123
- DE-U1- 9 312 826

## Beschreibung

Die vorliegende Erfindung betrifft eine Sanitärarmatur gemäss dem Oberbegriff des Patentanspruchs 1.

Sanitärarmaturen dieser Art sind allgemein bekannt. Ein Betätigungshebel sitzt fest auf einem Steuerschaft einer in einem Armaturengehäuse angeordneten Steuerpatrone. Durch Hoch- und Niederschwenken des Betätigungshebels wird der Steuerschaft um seine Schwenkachse verschwenkt und dabei der Wasserfluss durch die Sanitärarmatur gesteuert. Um dabei einen Konflikt des Betätigungshebels mit dem Armaturengehäuse auszuschliessen ist es oft notwendig, zwischen dem Armaturengehäuse und dem Betätigungshebel einen grossen Abstand vorzusehen, oder am Betätigungshebel beziehungsweise am Armaturengehäuse eine Ausnehmung oder einen Ausschnitt auszubilden, was einerseits aufwendig und andererseits unansehnlich ist.

Die Druckschrift DE 38 38 765 A1 offenbart ein sanitäres Wasserventil mit einem aus drei übereinander liegenden Steuerscheiben bestehenden und von einem Gehäuse umschlossenen Steuerelement. Die untere und die obere Steuerscheibe stehen dabei fest und die mittlere Steuerscheibe ist über ein an ihr angreifendes Betätigungsorgan relativ zu den festen Steuerscheiben verschiebbar, wobei das kipp- bzw. schwenkbar angeordnete Betätigungsorgan den Gehäusedeckel und die obere feste Steuerscheibe durchgreift. Um die Lagerung des Betätigungsorgans zu verbessern, kommt der Drehpunkt des Betätigungsorgans in der Ebene des Gehäusedeckels zu liegen.

Die Druckschrift DE 33 27 776 A1 offenbart ein Eingriffmischventil, bei dem, zum Zwecke einer guten und dichten Lagerung des Handhebels im Mischventil, der Handhebel in einem um eine Mittelachse drehbar aber axial festliegenden, auf dem Ventilgehäuse gehalterten Hebelkopf in relativ etwa senkrecht zur Mittelachse in der Wandung des Hebelkopfes ausgebildeten Schwenklagern angeordnet ist. Der Handhebel ist koaxial zur Lagerachse wenigstens durch eines der Schwenklager aus dem Hebelkopf herausgeführt.

Die Druckschrift DE 44 43 123 A1 offenbart einen Einhebelmischer, bei dem der Mischerhebel und die Abdeckkappe getrennte Bauteile sind und der Mischerhebel in der Abdeckkappe in der Horizontalen beweglich geführt ist. Der Mischerhebel und ein Stellhebel in der Kartusche sind dabei über eine Kulisse verbunden, so dass eine gleichmässige und genaue Bewegung des Stellhebels zur Veränderung der Wassermenge gesichert ist.

Es ist deshalb eine Aufgabe der vorliegenden Erfindung, eine gattungsgemässe Sanitärarmatur derart weiterzubilden, dass die oben genannten Nachteile behoben sind.

Diese Aufgabe wird mit einer Sanitärarmatur gelöst, welche die Merkmale des Patentanspruchs 1 aufweist. Da der Betätigungshebel um eine eigene Schwenkachse schwenkbar ist, kann ein Konflikt, bei der Bewegung des Betätigungshebels, zwischen diesem und dem Armaturengehäuse vermieden werden. Beim Hoch- und Niederschwenken des Betätigungshebels wird der Steuerschaft um seine Schwenkachse verschwenkt, da er in einer Führung des Betätigungshebels gelagert ist.

Die Hebelachse kann bezüglich der Schwenkachse ortsfest angeordnet sein. In bevorzugter Weise ist die Hebelachse jedoch in einer Kulisse geführt, sodass sich, in Folge der von der Schwenkachse beabstandeten Führung zwischen dem Steuerschaft und dem Betätigungshebel, für diesen, beim Verschwenken um die Hebelachse, zusätzlich zur Schwenkbewegung eine translatorische Bewegung entlang der Kulisse ergibt. Insbesondere kann durch entsprechende Ausformung der Kulisse eine translatorische Bewegung mit einer Komponente in Richtung der Längsachse der Steuerpatrone beziehungsweise in Längsrichtung des Steuerschafts erzielt werden. Mittels derartiger Massnahmen ist es möglich, beim Hoch- und Niederschwenken des Betätigungshebels dem Armaturengehäuse auszuweichen um Konflikte mit diesem zu verhindern ohne am Armaturengehäuse oder Betätigungshebel Konflikte verhindernde, von aussen sichtbare Ausnehmungen vorsehen zu müssen.

Bevorzugte Ausführungsformen der erfindungsgemässen Sanitärarmatur sind in den abhängigen Patentansprüchen angegeben.

Die Erfindung wird anhand eines in der Zeichnung dargestellten Ausführungsbeispiels erläutert. Es zeigen rein schematisch:
- Fig. 1: in einem Längsschnitt einen Teil einer erfindungsgemässen Sanitärarmatur;
- Fig. 2: in Untersicht einen Betätigungshebel der Sanitärarmatur gemäss Fig. 1;
- Fig. 3: einen Längsschnitt durch den Betätigungshebel;
- Fig. 4: ein Steuerteil der Sanitärarmatur gemäss Fig. 1 in einem Längsschnitt entlang der Linie IV - IV der Fig. 5;
- Fig. 5: in Draufsicht das Steuerteil;
- Fig. 6: im Längsschnitt einen Teil eines Aussengehäuses des Armaturengehäuses der Sanitärarmatur gemäss Fig. 1;
- Fig. 7: in Draufsicht das Aussengehäuse;
- Fig. 8: in gleicher Darstellung wie Fig. 1 die dort gezeigte Sanitärarmatur mit dem Betätigungshebel in einer unteren Endlage;
- Fig. 9: in gleicher Darstellung wie Fig. 8 die Sanitärarmatur, wobei der Betätigungshebel aus der unteren Endlage um 5° hochgeschwenkt ist;
- Fig. 10: in gleicher Darstellung wie Fig. 8 und 9 die Sanitärarmatur, wobei der Betätigungshebel aus der unteren Endlage um 10° hochgeschwenkt ist;
- Fig. 11: in gleicher Darstellung wie in den Fig. 8 bis 10 die Sanitärarmatur, wobei der Betätigungshebel aus der unteren Endlage um 15° hochgeschwenkt ist;
- Fig. 12: in gleicher Darstellung wie in den Fig. 8 bis 11 die Sanitärarmatur, wobei der Betätigungshebel aus der unteren Endlage um 20° hochgeschwenkt ist; und
- Fig. 13: in gleicher Darstellung wie in den Fig. 8 bis 12 die Sanitärarmatur, wobei der Betätigungshebel aus der unteren Endlage um 25° in eine obere Endlage hochgeschwenkt ist.

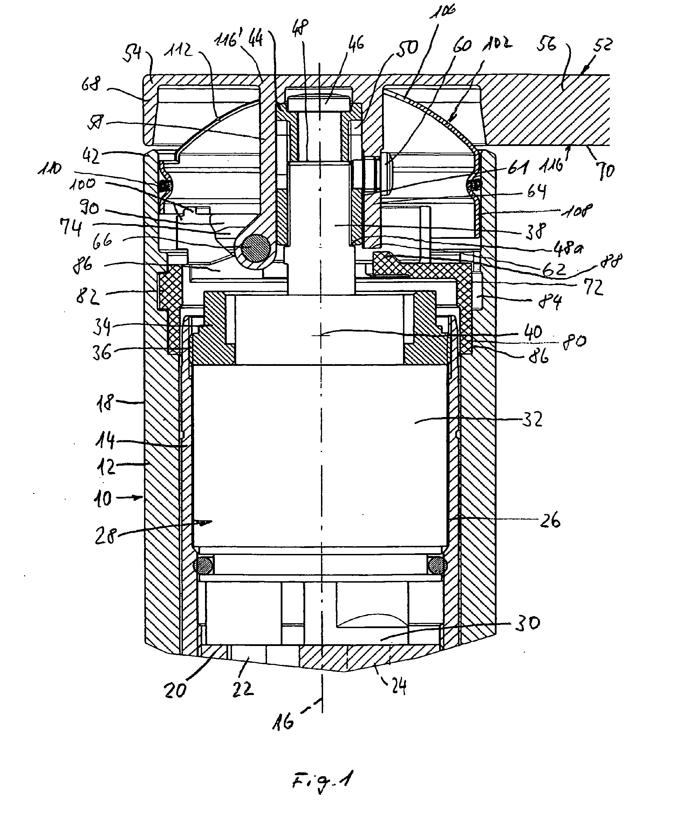

Eine in der Fig. 1 dargestellte erfindungsgemässe Sanitärarmatur weist ein Armaturengehäuse 10 mit einem Aussengehäuse 12 und einem Innengehäuse 14 auf. Das Aussengehäuse 12 ist hohlzylinderförmig ausgebildet und weist eine zu einer Gehäuseachse 16 konzentrische, kreiszylinderförmige, aussenliegende Mantelfläche 18 auf.

Im Innern des Aussengehäuses 12 ist das Innengehäuse 14 angeordnet, welches ebenfalls hohlzylinderförmig ausgebildet, jedoch mit einem Zwischenboden 20 versehen ist. Das Innengehäuse 14 ist in allgemein bekannter Art und Weise dazu bestimmt, an einem Waschtisch beziehungsweise dem Rand eines Waschbeckens befestigt zu werden. Weiter ist das Aussengehäuse 12 in bekannter Art und Weise am Innengehäuse 14 befestigt. Diese Befestigung kann derart ausgestattet sein, dass das mit einem Wasserauslauf versehene Aussengehäuse 12 um das Innengehäuse 14 hin- und her schwenkbar ist, beispielsweise innerhalb eines Schwenkwinkels von ca. 160°. Die Befestigung ist jedoch auch bewegungslos denkbar. Der Zwischenboden 20, welcher im vorliegenden Beispiel in das Innengehäuse 14 eingewindet ist, weist einen Kaltwasserdurchlass 22, einen in der Fig. 1 nicht sichtbaren Warmwasserdurchlass, sowie einen schematisch angedeuteten Mischwasserdurchlass 24 auf, welcher in bekannter Art und Weise mit dem Wasserauslass der Sanitärarmatur strömungsverbunden ist. Der Kaltwasserdurchlass 22 und der Warmwasserdurchlass sind in bekannter Art und Weise mit einer Kaltwasserbeziehungsweise Warmwasserzuleitung verbunden. Selbstverständlich könnte der Zwischenboden 20 einstückig am Innengehäuse 14 ausgebildet sein.

Das Innengehäuse 14 begrenzt umfangsseitig und der Zwischenboden 20 bodenseitig einen Aufnahmeraum 26, in welchem eine Steuerpatrone 28 eingesetzt ist. Die Längsachse der Steuerpatrone 28 fällt bei der gezeigten Ausführungsform mit der Gehäuseachse 16 zusammen. Ein Patronenfuss 30 eines Patronengehäuses 32 der Steuerpatrone 28 weist einen Kaltwasser- und einen Warmwassereinlass sowie einen Mischwasserauslass auf, welche mit den entsprechenden Durchlässen 22, 24 des Zwischenbodens 20 in Strömungsverbindung stehen. Auf der auf den Patronenfuss 30 abgewandten Seite liegt am Patronengehäuse 32 eine Ringmutter 34 an, welche in ein Innengewinde 36 des Innengehäuses 14 eingewindet und mit einem bestimmten Drehmoment angezogen ist, um die Steuerpatrone 28 am Zwischenboden 20 in dichtender Anlage zu halten.

Die Steuerpatrone 28 weist weiter einen Steuerschaft 38 auf, welcher auf der dem Patronenfuss 30 abgewandten Seite über das Patronengehäuse 32 vorsteht und im Innern des Patronengehäuses 32 um eine rechtwinklig zur Längsachse 16 der Steuerpatrone 28 verlaufende Schwenkachse 40 schwenkbar gelagert ist. Durch verschwenken des Steuerschafts 38 um die Schwenkachse 40 wird in bekannter Art und Weise der Wasserdurchfluss gesteuert. Weiter ist der Steuerschaft 38 zusammen mit seiner Schwenkachse 40 um die Längsachse 16 der Steuerpatrone 28 drehbar, um ebenfalls in bekannter Art und Weise die Temperatur des Mischwassers einzustellen.

Weiter sei an dieser Stelle erwähnt, dass der Steuerschaft 38 einen quadratischen Querschnitt aufweist, wobei zwei einander gegenüberliegende Seiten parallel zur Schwenkachse 40 verlaufen, und dass das Aussengehäuse 12 und Innengehäuse 14, ein einstückiges Armaturengehäuse 10 bildend, integral ausgeführt sein können. Überdies könnte der Steuerschaft 38 auch einen andern Querschnitt aufweisen, beispielsweise einen kreisrunden mit Aussenverzahnung.

In Richtung der Gehäuseachse 16 gesehen, endet das Innengehäuse 14 annähernd beim steuerschaftseitigen Ende des Patronengehäuses 32, während das Aussengehäuse 12 in axialer Richtung über das Innengehäuse 14 vorsteht und etwa auf der Höhe des freien Endes des Steuerschafts 38 endet. Die diesseitige ringförmige Stirnseite des Aussengehäuses 12 und somit des Armaturengehäuses 10 ist mit 42 bezeichnet.

Auf den Steuerschaft 38 ist ein hülsenförmiges Gleitstück 44 aufgesetzt, welches mittels einer von der freien Frontseite des Steuerschafts 38 her in diesen eingewindeten Halteschraube 46 mit einer Innenschulter in Anlage an der eine Schulter 48 bildenden Frontseite des Steuerschafts 38 gehalten ist. Es ist jedoch auch denkbar, das Gleitstück 44 mit seinem dem Patronengehäuse 32 zugewandten Ende an einer am Steuerschaft 38 ausgebildeten Aussenschulter 48a in Anlage zu halten. Das im Wesentlichen die Form eines quadratischen Hohlzylinders aufweisende und mit dem Steuerschaft 38 drehfeste Gleitstück 44 weist an seinen Seitenwänden, welche parallel zur Schwenkachse 40 verlaufen, je eine in Längsrichtung des Steuerschafts 38 verlaufende, in radialer Richtung gegen aussen offene Nut 50 auf, welche in Richtung zum Patronengehäuse 32 hin, als auch in Richtung von diesem weg, begrenzt ist. Falls der Steuerschaft 38, wie weiter oben erwähnt, einen andern Querschnitt aufweist, ist die Innenform des Gleitstücks 44 daran angepasst.

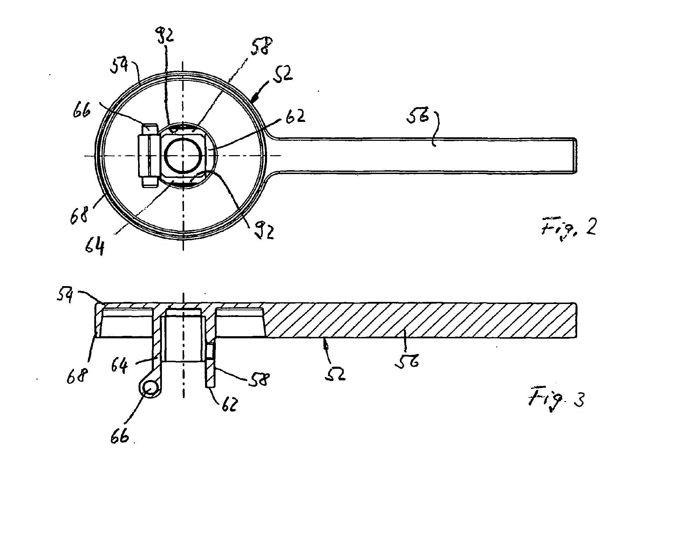

Ein über das Gleitstück 44 mit dem Steuerschaft 38 zusammenwirkender Steuerhebel 52 ist in Fig. 1 teilweise sowie in den Fig. 2 und 3 vollständig dargestellt. Er ist pilzförmig ausgebildet und von seinem Schirm 54 steht in radialer Richtung gegen aussen ein Handhebel 56 ab. Ein vom Schirm 54 zentral abstehender, hohlzylinderartiger Stamm 58 ist in Längsrichtung des Steuerschafts 38 mit diesem beziehungsweise dem Gleiterstück 44 gefügt und mittels einer, in die Mantelwand 64 des Stamms 58 eingewindeten Kopfschraube 60 in Längsrichtung des Steuerschafts 38 begrenzt bewegbar gehalten, in dem ein gewindeloser, kreiszylinderförmiger Endabschnitt des Schafts der Kopfschraube 60 in die Nut 50 eingreift, welche auf der dem Handhebel 56 zugewandten Seite des Gleitstücks 44 vorhanden ist. Überdies ist der lichte Querschnitt der sacklochartigen Ausnehmung des Stamms 58, entsprechend der Aussenform des Gleitstücks 44, mit quadratischem Querschnitt geformt. Dadurch ist die Drehmitnahme des Steuerschafts 38 beim Drehen des Betätigungshebels 52 um die Längsachse 16 der Steuerpatrone 28 gewährleistet, ohne dass dies durch die Kopfschraube 60 in Zusammenwirkung mit der Nut 50 getätigt werden muss. Der Stamm 58 des Betätigungshebels 52 bildet eine, im vorliegenden Fall lineare, Führung 61 für den Steuerschaft 38.

Das freie Ende der dem Handhebel 56 zugewandten Seite der Mantelwand 64 des Stamms 58 dient als Anschlag 62 und der freie Endbereich der Mantelwand 64 auf der dem Handhebel 56 abgewandten Seite ist verdickt ausgebildet und von einer Hebelachse 66 durchgriffen, welche parallel zur Schwenkachse 40 verläuft und beidseits über den Stamm 58 vorsteht.

Der Schirm 54 weist einen umlaufenden, in Richtung gegen das Armaturengehäuse 10 gerichteten Kragen 68 auf, dessen Aussendurchmesser im gezeigten Beispiel mit dem Aussendurchmesser des Armaturengehäuses 10 beziehungsweise dessen Aussengehäuses 12 übereinstimmt und dessen kreiszylinderförmige Form der äusseren Mantelfläche 18 weiterführt. Überdies ist der Kragen 68 bei der in der Fig. 1 gezeigten Schliessstellung, in welcher der Betätigungshebel 52 sich in einer unteren Endlage 70 befindet, durch einen umlaufenden gleichförmigen schmalen Spalt von der Stirnseite 42 des Aussengehäuses 12 entfernt.

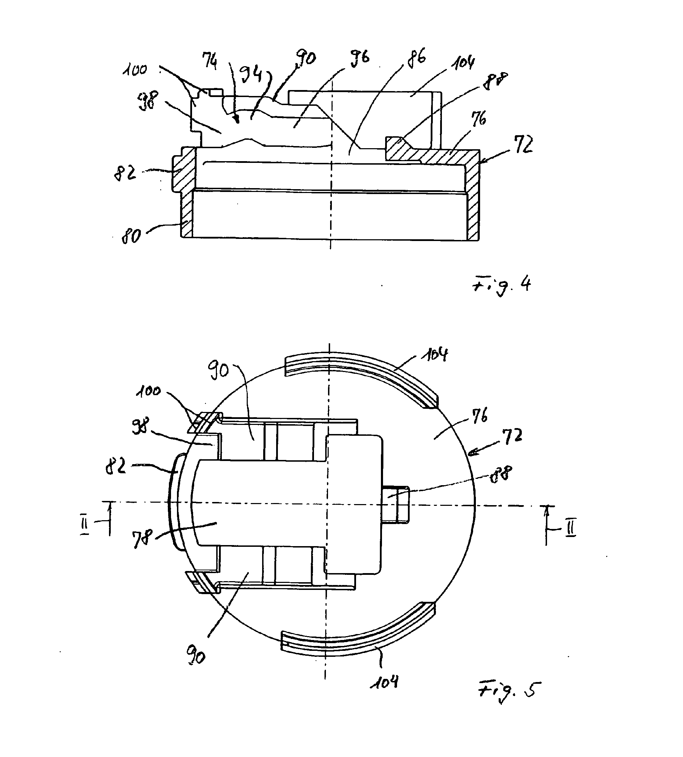

Die Hebelachse 66 ist dazu bestimmt, beidseits des Stamms 58, mit einer an einem Steuerteil 72 ausgebildeten Kulisse 74 zusammenzuwirken. Wie dies insbesondere aus den Fig. 4 und 5 hervorgeht, ist das Steuerteil 72 in der Form eines auf dem Kopf stehenden Bechers ausgebildet, wobei der Boden 76 eine durchgehende im Wesentlichen rechteckförmige Öffnung 78 aufweist, welche - im montierten Zustand - vom Steuerschaft 38 durchgriffen ist; vergleiche dazu Fig. 1. Vom Boden 76 steht in Richtung gegen unten, im montierten Zustand in Richtung zum Patronengehäuse 32 hin, eine kreiszylinderförmige mantelartige Wand 80 ab, von welcher auf der in den Fig. 4 und 5 gezeigten linken Seite, bezüglich der Gehäuseachse 16 in radialer Richtung gegen aussen, ein Führungsnocken 82 vorsteht. Dieser Führungsnocken 82 ist, im montierten Zustand, siehe Fig. 1, in einer umlaufenden Innennut 84 des Aussengehäuses 12 geführt. Weiter ist, im montierten Zustand, die Wand 80 mit ihrem vom Boden 76 abgewandten Endbereich in einer entsprechend geformten, umlaufenden Ausnehmung 86 des Aussengehäuses 12 aufgenommen. In Richtung der Gehäuseachse 16 gesehen, greift das Innengehäuse 14 mit seinem diesseitigen Endbereich in das Steuerteil 72 hinein vor und sichert dadurch den Halt der Wand 80 in der Ausnehmung 86 und des Führungsnockens 82 in der Innennut 84. Dies ermöglicht auch die Ausbildung des Steuerteils 72 aus einem Kunststoff.

Bezüglich des Führungsnockens 82 diametral gegenüberliegend weist der Boden 76 beim Rand der Öffnung 78 eine in Richtung gegen oben vorstehende Anschlagnase 88 auf, welche einen Gegenanschlag für den Anschlag 62 des Betätigungshebels 52 bildet. Nur der Vollständigkeit halber sei erwähnt, dass der Querschnitt der Öffnung 78 in einem an die Anschlagnase 88 angrenzenden Bereich bis etwa mittig des Steuerteils 72 für Montagezwecke erweitert ausgebildet ist.

Die Kulisse 74 ist gegengleich an zwei einander gegenüberliegenden und vom Boden 76 gegen oben abstehenden Kulissenwänden 90 ausgebildet. Diese grenzen aneinander gegenüberliegenden Seiten an die Öffnung 78 an. Im Weitern ist der Abstand dieser Kulissenwände 90 auf den Stamm 58 des Betätigungshebel 52 abgestimmt um mit äusseren zueinander parallelen Mitnahmeebenen 92 des Stamms 58 drehmitnahmewirksam zusammenzuwirken; bezüglich der Mitnahmeebenen 92 wird auf Fig. 2 verwiesen.

Die nutartige Kulisse 74 hat einen Buckelabschnitt 94 mit einem vom Patronengehäuse 32 weg und zum Betätigungshebel 52 hin gerichteten Buckel, sowie radial innen einen daran anschliessenden linearen Innenabschnitt 96 und einen radial aussen daran anschliessenden, sich erweiternden Aussenabschnitt 98. Letzterer dient wiederum Montagezwecken. Der Innenabschnitt 96 sowie die untere Flanke des Aussenabschnitts 98 verlaufen parallel zu einer rechtwinklig zur Gehäuseachse 16 und somit der Längsachse der Steuerpatrone 28 verlaufenden Ebene, wobei sich der Steuerschaft 38, in der unteren Schwenklage 70, auch in dieser Achse befindet. Weiter weist der Buckel an seiner Krete einen geradlinigen, zu dieser Ebene parallelen Teil auf.

Weiter stehen von den beiden Kulissenwänden 90 radial aussen, in radialer Richtung gegen aussen und gegen oben, Mitnahme- beziehungsweise Haltenasen 100 ab welche dazu bestimmt sind, mit einer Abdeckkappe 102 - vergleiche Fig. 1 - drehmitnahmewirksam zusammenzuwirken. Demselben Zweck dienen zwei vom Boden 76 gegen oben abstehende, in Umfangsrichtung verlaufende Mitnahmewände 104.

Die Abdeckkappe 102 greift, wie dies der Fig. 1 entnehmbar ist, mit ihrem kuppelartigen Abschnitt 106 in den vom Schirm 54 gebildeten Raum des Betätigungshebels 52 und mit ihrem an den kuppelartigen Abschnitt 106 anschliessenden Zylinderabschnitt 108 in das Aussengehäuse 12 hinein vor. Der Zylinderabschnitt 108 weist entgegen den Mitnahmewänden 104 und Mitnahmenasen 100 geformte Ausnehmungen auf, um eine drehwirksame Mitnahme mit dem Steuerteil 72 sicherzustellen. Die Haltenasen und entsprechende Nasen an den Mitnahmewänden 104 verhindern ein Lösen aus dieser Drehmitnahme. Weiter weist der Zylinderabschnitt 108 der Abdeckkappe 102 eine in radialer Richtung gegen innen gerichtete umlaufende Sicke auf, in welcher ein andererseits mit dem Aussengehäuse 12 zusammenwirkender O-Ring 110 angeordnet ist. Dieser verhindert das Eindringen von Schmutz in das Innere des Armaturengehäuses 10. Weiter weist der kuppelartige Abschnitt 106 der Abdeckkappe 102 einen schlitzartigen Durchlass 112 auf, welcher vom Stamm 58 des Betätigungshebels 52 durchgriffen ist und dessen Bewegung zulässt.

Beim gezeigten Ausführungsbeispiels ist, bei der der unteren Endlage 70 entsprechenden Schwenklage des Steuerschafts 38, die in Längsrichtung des Steuerschafts 38 gemessene Distanz zwischen der Schwenkachse 40 und der Drehachse der Hebelachse 66 ca. 1,4 mal grösser als diese Distanz gemessen rechtwinklig zur Längsrichtung des Steuerschafts 38. In bevorzugter Weise liegt dieses Verhältnis zwischen 1 und 2.

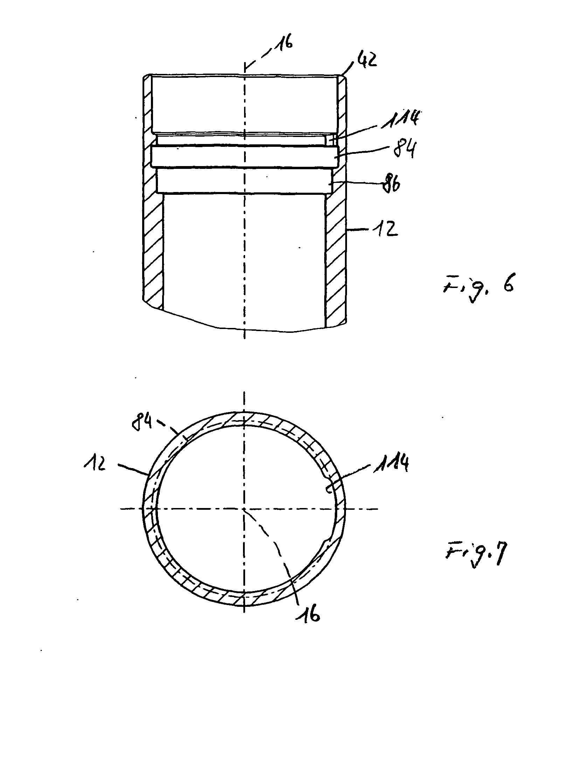

Zur einfachen Montage des Steuerteils 72 weist das Aussengehäuse 12, wie dies den Fig. 6 und 7 entnehmbar ist, auf der im montierten Zustand dem Handhebel 56 zugewandten Seite eine Einfahrnut 114 auf, welche in axialer Richtung von der Innennut 84 in Richtung zur Stirnseite 42 hin verläuft. Der Steuerteil 72 wird mit auf die Einfahrnut 114 ausgerichteten Führungsnocken 82 in axialer Richtung von der Stirnseite 42 her in das Aussengehäuse 14 eingefahren und sobald sich der Führungsnocken 82 in der Innennut 84 befindet um 180° um die Längsachse 16 gedreht. Da dieser Steuerteil 72 mit dem Steuerschaft 38 drehmitnahmewirksam verbunden ist und Steuerpatronen 28 in der Regel eine Drehung des Steuerschafts 38 um die Längsachse 16 von etwa 60° zulassen, ist das Steuerteil 72 mittels des in die Innennut 84 eingreifenden Führungsnockens 82 zuverlässig drehbar gehalten.

Geometrisch betrachtet ist im gezeigten Ausführungsbeispiel der Betätigungshebel 52 bezüglich des Steuerschafts 38 zweiarmig ausgebildet, wobei ein den Handhebel 56 aufweisender erster Arm 116 der Bedienung dient und wobei am zweiten Arm 116', welcher bezüglich des ersten Arms 116 auf der andern Seite des Steuerschafts 38 liegt, die Hebelachse 66 angeordnet ist. Dies hat zur Folge, dass beim Hochschwenken des Betätigungshebels 52 aus seiner unteren Endlage 70, wegen der damit verbundenen Schwenkbewegung des Steuerschafts 38 - in Fig. 1 in Gegenuhrzeigersinn - um die Schwenkachse 40, die Hebelachse 66 in radialer Richtung gegen aussen - in Fig. 1 gegen links - verschoben wird und somit die Kulisse 74 eine mit der Schwenkbewegung gekuppelte Hubbewegung des Betätigungshebels 54 bezüglich des Steuerschafts 38 und somit des Armaturengehäuses 10 steuert. Entsprechend gegengerichtet verläuft die Hubbewegung beim Niederschwenken des Betätigungshebels 52 in die untere Endlage 70. In Folge dieser gesteuerten Hubbewegung kann der Betätigungshebel 52, beziehungsweise dessen Schirm 54 sehr nahe bei der Stirnseite 42 des Armaturengehäuses 10 befinden, wobei in Folge der gesteuerten Hubbewegung ein Konflikt zwischen dem Armaturengehäuse 10 und dem Betätigungshebel 52 beim Schwenken des Betätigungshebels 52 verhindert ist. Weder am Armaturengehäuse 10 noch am Betätigungshebel 52 sind spezielle, von aussen sichtbare Ausnehmungen oder Formgestaltungen notwendig, um den genannten Konflikt zu verhindern.

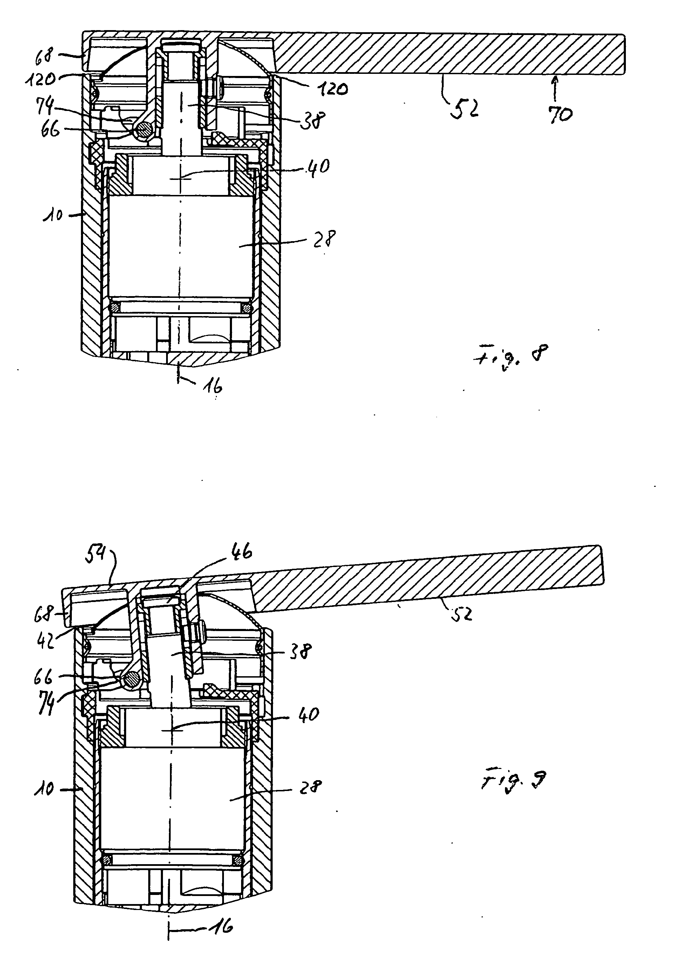

Die Funktionsweise der in den Figuren 1 bis 7 gezeigten Ausführungsform der erfindungsgemässen Sanitärarmaturen wird anhand den Fig. 8 bis 13 erörtert. Die dabei benutzten Bezugszeichen entsprechen den weiter oben verwendeten Bezugszeichen. Die Fig. 8 bis 13 zeigen, in gleicher Darstellung wie in Fig. 1, die Sanitärarmatur zu jeweils um 5° unterschiedlichen Stellungen des Betätigungshebels 52.

In der Fig. 8 befindet sich der Betätigungshebel 52 in seiner unteren Endlage 70, wie dies auch bei der Fig. 1 der Fall ist. Der Steuerschaft 38 verläuft in Richtung der Längsachse der Steuerpatrone 28 und somit im vorliegenden Fall der Gehäuseachse 16. In dieser Stellung des Steuerschafts 38 ist der Wasserfluss durch die Sanitärarmatur unterbrochen. Die Hebelachse 66 befindet sich auf der dem Steuerschaft 38 zugewandten Seite des Buckels im Innenabschnitt 96 bei dessen Übergang in den Buckelabschnitt 94; vergleiche Fig. 4. Zwischen dem Kragen 68 und dem Armaturengehäuse 10 ist ein umlaufender schmaler Spalt konstanter Breite vorhanden.

Um den Wasserfluss durch die Sanitärarmatur zu starten, wird der Betätigungshebel 52 aus seiner unteren Endlage 70 hochgeschwenkt. In der Fig. 9 ist dies, gegenüber der unteren Endlage 70, um 5° geschehen. Entsprechend ist auch der Steuerschaft 38 um 5° gegenüber der Längsachse 16 der Steuerpatrone 28 im Gegenuhrzeigersinn verschwenkt. Diese Schwenkbewegung hat zu einer translatorischen Verschiebung der Hebelachse 66 in den Buckelabschnitt 94 hinein und dort in den ansteigenden Ast hinein zur Folge. Zusätzlich zur Schwenkbewegung des Betätigungshebels 52 um die Schwenkachse 40 wurde dieser entsprechend der Form der Kulisse 74 in Längsrichtung des Betätigungshebels 52 angehoben. Dies ist besonders einfach erkennbar am Abstand zwischen der Halteschraube 46 und dem Schirm 54 des Betätigungshebels 52, verglichen mit dem betreffenden Abstand in Fig. 8. In Folge des beschriebenen Anhebens des Betätigungshebels 52 berührt dieser das Armaturengehäuse 10 nicht. Aufgrund der runden Form des Armaturengehäuses 10 und des Kragens 68 läuft letzterer mit Abstand an der Stirnseite 42 vorbei.

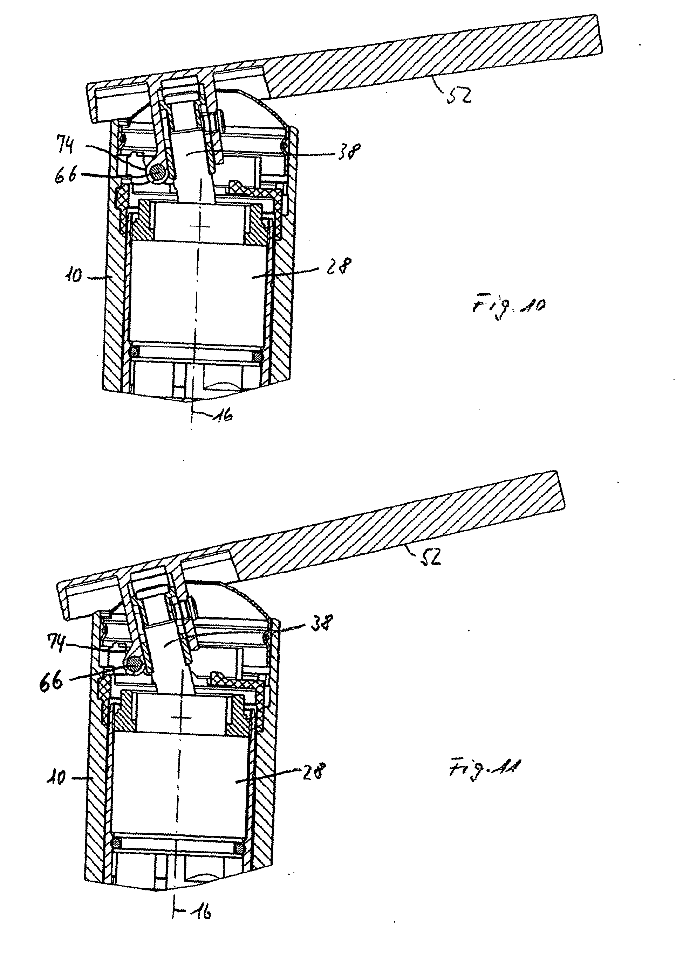

In Fig. 10 ist der Betätigungshebel 52 um weitere 5°, d.h. um 10° gegenüber der unteren Endlage 70, hochgeschwenkt gezeigt. Das entsprechende Verschwenken des Steuerschafts 38 führte zu einer Verschiebung der Hebelachse 66 in den Bereich der Krete der Kulisse 74, was eine weitere Hubbewegung des Betätigungshebels 72 relativ zum Steuerschaft 38 zur Folge hatte. Dies verhindert eine Berührung zwischen dem Betätigungshebel 52 und dem Armnaturengehäuse 10 auf entsprechend grösserer Breite in Richtung rechtwinklig zur Zeichenebene der Fig. 10.

Fig. 11 zeigt die Situation, bei welcher der Betätigungshebel 52 um weitere 5°, d.h. gegenüber der unteren Endlage 70 um 15°, hochgeschwenkt ist. Dabei wurde die Hebelachse 66 zu dem Aussenabschnitt 98 zugewandten Ende der Krete verschoben, was ein weiteres Anheben des Betätigungshebels 52 bezüglich dem Steuerschaft 38 zur Folge hatte. Relativ zum Armaturengehäuse 10 befindet sich in Fig. 10 und 11 die Hebelachse 66, in Richtung der Gehäuseachse 16 gesehen, an derselben Stelle, in Folge der Kreisform des Armaturengehäuses 10 und des Kragens 68 ist jedoch in Folge der stärkeren Schräglage des Betätigungshebels 52 in Fig. 11, verglichen mit jener in Fig. 10, eine Berührung zwischen Betätigungshebel 52 und Armaturengehäuse 10 verhindert.

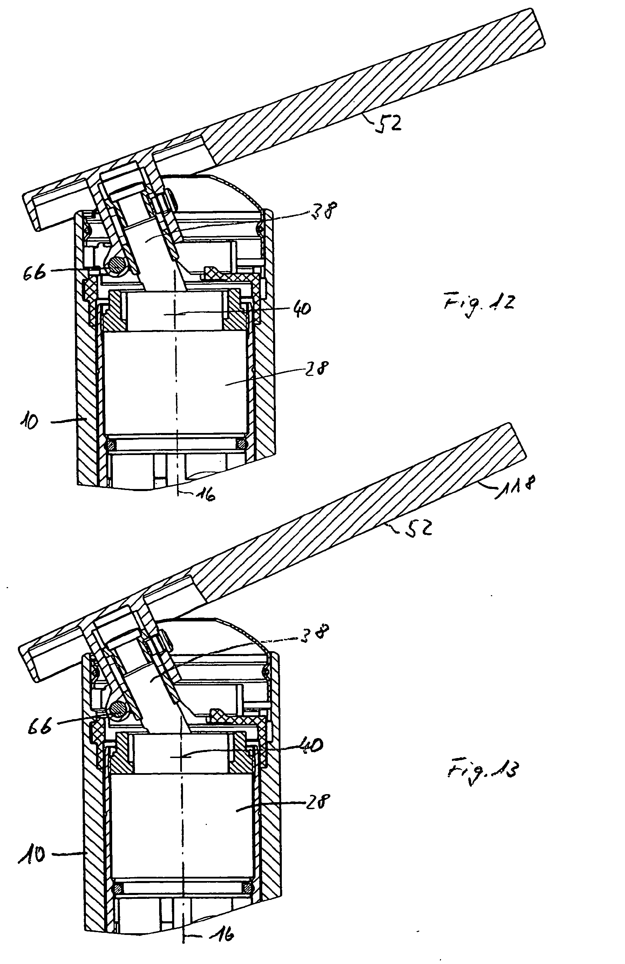

In Fig. 12 ist der Betätigungshebel 52, verglichen zu Fig. 11, um weitere 5°, bezüglich der unteren Endlage 70 somit um 20° hochgeschwenkt. Dabei hat die Hebelachse 66 den dem Aussenabschnitt 98 zugewandten, abfallenden Teil des Buckelabschnitts 94 durchlaufen. Da dieser etwa rechtwinklig zur aktuellen Längsrichtung des Steuerschafts 38 verläuft, hat im Zuge der genannten Bewegung der Betätigungshebel 52 seine Hublage bezüglich dem Steuerschaft 38 beibehalten. In Folge der Schwenkbewegung um die Schwenkachse 40 hat jedoch der Betätigungshebel 52 eine weitere Bewegung - in Darstellung der Fig. 12 - nach links gemacht, wodurch weiterhin ein Konflikt zwischen dem Armaturengehäuse 10 und dem Betätigungshebel 52 vermieden ist.

In Fig. 13 ist der Betätigungshebel 52 gegenüber der unteren Endlage 70 um 25° in die obere Endlage 118 hochgeschwenkt gezeigt. Dadurch ist der Wasserfluss durch die Sanitärarmatur maximal. In Folge der entsprechenden Schwenkbewegung des Steuerschafts 38 wurde, verglichen mit Fig. 12, die Hebelachse 66 im rechtwinklig zur Längsachse 16 verlaufenden Aussenabschnitt 98 der Kulisse 74 verschoben, was in Folge der grösser gewordenen Schräglage des Steuerschafts 38 zu einem weiteren Anheben des Betätigungshebels 52 relativ zum Steuerschaft 38 geführt hat. Der genannte Hub ist in der oberen Endlage 118 maximal.

Wird der Betätigungshebel 52 von seiner oberen Endlage 118 in seine untere Endlage 70 niedergeschwenkt, erfolgt die Relativbewegung zwischen dem Steuerschaft 38 und dem Betätigungshebel 52 bezüglich der obigen Darlegungen in umgekehrter Richtung.

Befindet sich der Betätigungshebel 52 in seiner unteren Endlage 70 ist, wie dies der Fig. 1 entnehmbar ist, der Anschlag 62 vom durch die Anschlagnase 88 gebildeten Gegenanschlag beabstandet. Wird jedoch der Betätigungshebel 52 über die untere Endlage 70 hinaus mit entsprechend grossem Kraftaufwand beziehungsweise mit Gewalt bewegt, kommt der Anschlag 62 an der Anschlagnase 88 nach einem Grenzwinkel zur Anlage. Dies verhindert einerseits eine übermässige Beanspruchung der Steuerpatrone 28 und andererseits eine Berührung zwischen dem Betätigungshebel 52 und dem Armaturengehäuse 10. Auch wird ein Überbiegen des Steuerschafts 38 verhindert; die Gefahr des Überbiegens ist insbesondere bei Steuerschäften 38 aus Kunststoff gegeben.

Soll die Mischwassertemperatur verändert werden, wird der Betätigungshebel 52 in bekannter Art und Weise um die Längsachse 16 der Steuerpatrone 28 gedreht. Dabei werden auch die Kulisse 74, beziehungsweise das Steuerteil 72 an welcher die Kulisse 74 ausgebildet ist, sowie die Abdeckkappe 102 mitgedreht. Die Steuerung der Hubbewegung des Betätigungshebels 52 in Funktion seiner Schwenklage ist somit von der Drehlage unabhängig.

Da im gezeigten Ausführungsbeispiel die Kulisse 74 beziehungsweise der Steuerteil 72, an welchem die Kulisse ausgebildet ist, in vorbestimmter axialer Position am Armaturengehäuse 10 drehbar gelagert ist, befindet sich der Betätigungshebel 52, in Richtung der Gehäuseachse 16 gesehen, immer in derselben Position unabhängig von der Position der Steuerpatrone 28. Toleranzen in der Lage der Steuerpatrone 28 können somit problemlos aufgenommen werden.

Durch Änderung der Form der Kulisse 74 sowie der Lage und des Abstandes der Hebelachse 66 zur Schwenkachse 40 kann die Hubbewegung des Betätigungshebels 52 relativ zum Steuerschaft 38 der gewünschten Situation angepasst werden. Weiter ist es denkbar, anstelle einer Kulissensteuerung, die Hebelachse 66 über Laschen relativ zum Armaturengehäuse 10 anzulenken, um beim Verschwenken des Betätigungshebels 52 eine entsprechende Hubbewegung zu erzielen.

Im gezeigten Ausführungsbeispiel ist der Betätigungshebel 52 am Steuerschaft 38 ausschliesslich in Längsrichtung des Steuerschafts 38 linear verschiebbar geführt. Der Betätigungshebel 52 erstreckt sich rechtwinklig zu dieser Führungsrichtung. Es ist jedoch auch möglich, dass die Führung 61 in einem andern Winkel zur Längsrichtung des Betätigungshebel 52 verläuft. Überdies ist es auch denkbar, den Betätigungshebel 52 mittels seiner Hebelachse 66 ortsfest am Armaturengehäuse 10 anzulenken, beispielsweise an einer der in Fig. 8 mit 120 bezeichneten Anlenkstellen. Auch in diesem Fall wäre ein Konflikt beim Verschwenken des Betätigungshebels 52 zwischen diesen und dem Armaturengehäuse 10 verhindert. Allerdings müsste in diesem Fall die Führung des Steuerschafts 38 am Betätigungshebel 52 um eine zur Schwenkachse 40 und Hebelachse 66 parallele Achse schwenkbar sein. Bevorzugt ist jedoch eine Ausführungsform, wie sie in den Figuren dargestellt und weiter oben beschrieben ist oder eine ähnliche Ausführungsform.

Fallen die Gehäuseachse 16 und die Längsachse der Steuerpatrone 28 nicht zusammen, beziehen sich die angegebenen Relationen auf die Längsachse der Steuerpatrone 28.

Falls der Betätigungshebel 52 nicht um die Gehäuseachse 16 beziehungsweise die Längsachse der Steuerpatrone 28 drehbar sein muss, könnte die Kulisse 74 am Armaturengehäuse oder einem an diesem unbeweglich angeordneten Steuerteil 72 ausgebildet sein.

## Patentansprüche

1. Sanitäraramatur mit einem Armaturengehäuse (10), einer in diesem angeordneten, einen um eine Schwenkachse (40) schwenkbaren Steuerschaft (38) aufweisenden Steuerpatrone (28) und einem mit dem Steuerschaft (38) zusammenwirkenden. Betätigungshebel (52), wobei der Betätigungshebel (52) um eine zur Schwenkachse (40) parallele Hebelachse (66) schwenkbar gelagert ist, und der Steuerschaft (38) in einer Führung (61) des Betätigungshebels (52) aufgenommen und der Betätigungshebel um die Hebelachse (66) zwischen (52) zwischen einer unteren und einer oberen Endlage (70, 118) hoch- und niederschwenkbar ist, um den Steuerschaft (38) um die Schwenkachse (40) zu verschwenken und dabei den Wasserfluss zu steuern, **dadurch gekennzeichnet, dass** die Hebelachse (66) in einer Kulisse (74), entlang der Kulisse (74) verschiebbar gelagert ist.

2. Sanitärarmatur nach Anspruch 1, **dadurch gekennzeichnet, dass** der Betätigungshebel (52) bezüglich der Führung (61) zweiarmig ausgebildet ist, ein erster Arm (116) der Bedienung dient und die Hebelachse (66) am zweiten Arm (116') angeordnet ist.

3. Sanitärarmatur nach einem der Ansprüche 1 oder 2, **dadurch gekennzeichnet, dass** die Kulisse (74) einen Buckel (94) aufweist und die Hebelachse (66) in der unteren und in der oberen Endlage (70, 118) des Betätigungshebels (52) sich auf unterschiedlichen Seiten des Buckels (94) befindet.

4. Sanitärarmatur nach Anspruch 3, **dadurch gekennzeichnet, dass** die Kulisse (74) Abschnitte (96, 98) aufweist, zwischen welchen sich der Buckel (94) befindet und welche wenigstens annähernd parallel zu einer, bei in die untere Endlage (70) niedergeschwenktem Betätigungshebel (52), rechtwinklig zum Steuerschaft (38) verlaufenden Ebene verlaufen.

5. Sanitärarmatur nach einem der Ansprüche 1 bis 4, **gekennzeichnet durch** ein am Armaturengehäuse (10) angeordnetes Steuerteil (72) an dem die Kulisse (74) ausgebildet ist.

6. Sanitärarmatur nach Anspruch 5, **dadurch gekennzeichnet, dass** das Steuerteil (72) einen Anschlag (88) für den Betätigungshebel (52) aufweist, um das Niederschwenken des Betätigungshebels (52) über die untere Endlage (70) oder einen Grenzwinkel über die untere Endlage hinaus zu verhindern.

7. Sanitärarmatur nach einem der Ansprüche 5 oder 6, **dadurch gekennzeichnet, dass** der Steuerschaft (38) zusammen mit dem Betätigungshebel (52) um eine zur Schwenkachse (40) rechtwinklig verlaufende Achse (16) drehbar ist und das Steuerteil (72) mitdrehbar ausgebildet ist.

8. Sanitärarmatur nach Anspruch 7, **dadurch gekennzeichnet, dass** der Steuerschaft (38) eine Öffnung (78) des Steuerteils (72) durchgreift und das Steuerteil (72) einander gegenüber liegende Kulissenwände (90) aufweist, welche mit dem Steuerschaft (38) beziehungsweise dessen Führung (61) drehmitnahmewirksam zusammenwirken.

9. Sanitärarmatur nach einem der Ansprüche 1 bis 8, **dadurch gekennzeichnet, dass** der Steuerschaft (38) in der Führung (61) ausschliesslich in einer quer, vorzugsweise wenigstens annähernd rechtwinklig zum Betätigungshebel (52) verlaufenden Richtung linear verschiebbar geführt ist.

10. Sanitärarmatur nach einem der Ansprüche 1 bis 9, **dadurch gekennzeichnet, dass** ein Stamm (58) von einem Schirm (54) des Betätigungshebels (52) zentral absteht und eine lineare Führung (61) für den Steuerschaft (38) bildet.

## Claims

1. A sanitary fitting having a fitting housing (10), having a control cartridge (28), which is arranged in this fitting housing and has a control shank (38) which can be pivoted about a pivot axis (40), and having an actuating lever (52), which interacts with the control shank (38), the actuating lever (52) is mounted such that it can be pivoted about a lever axis (66) running parallel to the pivot axis (40), and the control shank (38) is accommodated in a guide (61) of the actuating lever (52) and the actuating lever (52) being pivotable about the lever axis (66) up and down between a bottom end position (70) and a top end position (118) in order to pivot the control shank (38) about the pivot axis (40) and to thereby control the water flow, wherein the lever axis (66) is mounted in a guide track (74) such that it can be displaced along the guide track (74).

2. The sanitary fitting as claimed in claim 1, wherein, in respect of the guide (61), the actuating lever (52) is of two-armed design, a first arm (116) serving for operating purposes and the lever axis (66) being arranged on the second arm (116').

3. The sanitary fitting as claimed in claim 1 or 2, wherein the guide track (74) has a hump (94) and, in the bottom end position (70) and in the top end position (118) of the actuating lever (52), the lever axis (66) is located on different sides of the hump (94).

4. The sanitary fitting as claimed in claim 3, wherein the guide track (74) has portions (96, 98) between which the hump (94) is located and which run at least more or less parallel to a plane which, when the actuating lever (52) has been pivoted down into the bottom end position (70), runs at right angles to the control shank (38).

5. The sanitary fitting as claimed in one of claims 1 to 4, which comprises a control part (72) which is arranged on the fitting housing (10) and on which the guide track (74) is formed.

6. The sanitary fitting as claimed in claim 5, wherein the control part (72) has a stop (88) for the actuating lever (52) in order to prevent the actuating lever (52) from being pivoted down beyond the bottom end position (70), or beyond a limit angle beyond the bottom end position.

7. The sanitary fitting as claimed in one of claims 5 or 6, wherein the control shank (38), together with the actuating lever (52) can be rotated about an axis (16) running at right angles to the pivot axis (40), and the control part (72) can be rotated along therewith.

8. The sanitary fitting as claimed in claim 7, wherein the control shank (38) passes through an opening (78) in the control part (72), and the control part (72) has mutually opposite guide-track walls (90) which interact with the control shank (38), or the guide (61) thereof, for rotary carry-along action.

9. The sanitary fitting as claimed in one of claims 1 to 8, wherein the control shank (38) is guided in the guide (61) such that it can be displaced linearly exclusively in a direction running transversely, preferably at least more or less at right angles, to the actuating lever (52).

10. The sanitary fitting as claimed in one of claims 1 to 9, wherein a stem (58) projects centrally from a head (54) of the actuating lever (52) and forms a linear guide (61) for the control shank (38).

## Revendications

1. Robinet sanitaire avec un corps de robinet (10), avec une cartouche de commande (28) disposée dans celui-ci, présentant une tige de commande (38) pouvant pivoter autour d'un axe de pivotement (40) et avec un levier d'actionnement (52) coopérant avec la tige de commande (38), dans lequel le levier d'actionnement (52) est monté de façon pivotante autour d'un axe de levier (66) parallèle à l'axe de pivotement (40), et la tige de commande (38) est logée dans un guidage (61) du levier d'actionnement (52) et le levier d'actionnement (52) peut pivoter vers le haut et vers le bas autour de l'axe de levier (66) entre une position d'extrémité inférieure et supérieure (70, 118) afin de faire pivoter la tige de commande (38) autour de l'axe de pivotement (40) et ainsi de commander le flux d'eau, **caractérisé en ce que** l'axe de levier (66) est monté dans une coulisse (74), de façon déplaçable le long de la coulisse (74).

2. Robinet sanitaire selon la revendication 1, **caractérisé en ce que** le levier d'actionnement (52) est réalisé à deux bras par rapport au guidage (61), un premier bras (116) sert pour la manoeuvre et l'axe de levier (66) est disposé sur le second bras (116').

3. Robinet sanitaire selon l'une quelconque des revendications 1 ou 2, **caractérisé en ce que** la coulisse (74) présente un renflement (94) et l'axe de levier (66) se trouve sur des côtés différents du renflement (94) dans la position d'extrémité inférieure et dans la position d'extrémité supérieure (70, 118) du levier d'actionnement (52).

4. Robinet sanitaire selon la revendication 3, **caractérisé en ce que** la coulisse (74) présente des parties (96, 98), entre lesquelles se trouve le renflement (94) et qui s'étendent au moins à peu près parallèlement à un plan s'étendant perpendiculairement à la tige de commande (38) lorsque le levier d'actionnement (52) est abaissé dans la position d'extrémité inférieure (70).

5. Robinet sanitaire selon l'une quelconque des revendications 1 à 4, **caractérisé par** une pièce de commande (72) disposée sur le corps de robinet (10), sur laquelle la coulisse (74) est réalisée.

6. Robinet sanitaire selon la revendication 5, **caractérisé en ce que** la pièce de commande (72) présente une butée (88) pour le levier d'actionnement (52), afin d'empêcher l'abaissement du levier d'actionnement (52) au-delà de la position d'extrémité inférieure (70) ou d'un angle limite au-delà de la position d'extrémité inférieure.

7. Robinet sanitaire selon l'une quelconque des revendications 5 ou 6, **caractérisé en ce que** la tige de commande (38) peut tourner avec le levier d'actionnement (52) autour d'un axe (16) s'étendant perpendiculairement à l'axe de pivotement (40) et la pièce de commande (72) est réalisée de façon à pouvoir tourner avec elle.

8. Robinet sanitaire selon la revendication 7, **caractérisé en ce que** la tige de commande (38) traverse une ouverture (78) de la pièce de commande (72) et la pièce de commande (72) présente des parois de coulisse (90) opposées l'une à l'autre, qui coopèrent avec la tige de commande (38) ou avec son guidage (61) d'une façon active en accompagnement de rotation.

9. Robinet sanitaire selon l'une quelconque des revendications 1 à 8, **caractérisé en ce que** la tige de commande (38) est guidée de façon linéairement déplaçable dans le guidage (61) exclusivement dans une direction s'étendant transversalement, de préférence au moins à peu près perpendiculairement au levier d'actionnement (52).

10. Robinet sanitaire selon l'une quelconque des revendications 1 à 9, **caractérisé en ce qu'**un tronc (58) est saillant au centre à partir d'un écran (54) du levier d'actionnement (52) et forme un guidage linéaire (61) pour la tige de commande (38).
